# EUROPÄISCHE PATENTSCHRIFT

(11) **EP 4 335 623 B1**
(45) Veröffentlichungstag und Bekanntmachung des Hinweises auf die Patenterteilung: **13.08.2025**
(21) Anmeldenummer: 23194845.6
(22) Anmeldetag: 01.09.2023
(51) Int. Cl.: B29C 49/78, B29C 49/06, B29C 49/12, B29C 49/36, B29C 49/46, B29L 31/00

(54) **VORRICHTUNG UND VERFAHREN ZUM UMFORMEN VON KUNSTSTOFFVORFORMLINGEN ZU KUNSTSTOFFBEHÄLTNISSEN MIT REGELUNG DER DRUCKANSTIEGSZEIT**
DEVICE AND METHOD FOR REFORMING PLASTIC PREFORMS INTO PLASTIC CONTAINERS WITH CONTROL OF THE PRESSURE INCREASE TIME
DISPOSITIF ET PROCÉDÉ DE DÉFORMATION D'ÉBAUCHES EN PLASTIQUE EN RÉCIPIENTS EN PLASTIQUE AVEC RÉGLAGE DU TEMPS DE MONTÉE DE PRESSION

(30) Priorität: 08.09.2022 DE 102022122885
(43) Veröffentlichungstag der Anmeldung: 13.03.2024
(73) Patentinhaber: Krones AG, 93073 Neutraubling (DE)
(72) Erfinder: Vogler, Daniel, 93073 Neutraubling (DE); Hirdina, Jochen, 93073 Neutraubling (DE); Hengl, Benedikt, 93073 Neutraubling (DE); Kulzer, Markus, 93073 Neutraubling (DE)
(74) Vertreter: Hannke Bittner & Partner mbB Regensburg

(56) Entgegenhaltungen:
- EP-A1- 1 175 990
- EP-A1- 2 722 153
- EP-A2- 1 974 892
- WO-A2-2007/077241

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt. Die Umformungseinrichtung und insbesondere Blasformmaschine oder Streck-Blasformmaschine weist dabei mehrere Umformungsstationen mit Blasformeinrichtungen auf, welche einen Hohlraum ausbilden, welcher der Negativform des herzustellenden Kunststoffbehältnisses entspricht. Die Kunststoffvorformlinge werden dabei üblicherweise innerhalb der Blasformeinrichtungen mit einer Reckstange in Längsrichtung gestreckt und anschließend durch Beaufschlagung mit einem fließfähigen Medium zu den Kunststoffbehältnissen umgeformt. Die Beaufschlagung mit dem fließfähigen Medium erfolgt dabei in mehreren verschiedenen Druckstufen mit unterschiedlichen Druckniveaus. Derartigen Vorrichtungen und Verfahren sind dabei beispielsweise auch aus EP 2 722 153 A1, EP 1 175 990 A1, EP 1 974 892 A2 oder WO 2007/077241 A2 bekannt.

Aus dem internen Stand der Technik der Anmelderin ist es dabei bekannt, die Kunststoffvorformlinge bzw. Kunststoffbehältnisse mit drei Druckstufen (P1, Pi, P2) zu beaufschlagen, wobei zwei davon vorzugsweise vollständig oder auch teilweise mit recycelter Luft (P1 u. Pi) versorgt werden. In jüngerer Zeit ist man dazu übergegangen noch eine weitere (Zwischen-blas)Druckstufe (Pi2) hinzuzufügen. Diese kann ebenfalls mit recycelter Luft versorgt wird. Mit der Einführung dieser weiteren Zwischenblasstufe wurden diverse Maschineneingaben umgestellt. Im internen Stand der Technik der Anmelderin ist dabei ein sogenannter Schieberegler vorgesehen, welcher den (zeitlichen) Anteil für das Zwischenblasen in der Ausformungsphase (Zwischenblasen und Fertigblasen) definiert. Auch andere Eingabemöglichkeiten wie beispielsweise Eingabefelder, oder ähnliches wären denkbar. Je kürzer die Druckanstiegszeit für die Zwischenblasstufe(n) ist, desto früher können die Kunststoffvorformlinge mit dem Fertigblasdruck beaufschlagt werden, was insbesondere bei anspruchsvollen bzw. komplizierten Behältnisformen vorteilhaft ist. Andererseits gilt jedoch auch, je länger die Druckanstiegszeit für die Zwischenblasstufe(n) ist, desto höher ist die Menge an Druckluft, welche recycelt werden kann, wobei sich an einer bestimmten, nicht direkt vorhersagbaren Stelle, ein Sättigungszustand einstellt. Je nach Anwendungsfall ist es dabei gegebenenfalls nicht möglich das maximale Recyclingpotenzial auszuschöpfen und gleichzeitig die geforderte Behälterqualität zu erreichen.

Zudem muss die ideale Schieberegler-Position manuell durch den Bediener festgelegt werden. Hierzu muss der Bediener die Behälterqualität augenscheinlich beurteilen und kann, falls die Druckluftrückgewinnung noch "Reserven" bietet, die Druckanstiegszeit für die Zwischenblasstufe(n) weiter erhöhen, um den Luftverbrauch zu optimieren. Dieses Vorgehen wird so lange wiederholt, bis entweder der Sättigungszustand erreicht wird oder die Behälterqualität am unteren Limit angelangt ist.

Diese Vorgehensweise ist dabei sehr fehleranfällig und zeitintensiv und auch kann keine gleichbleibende Behälterqualität bei verschiedenen Chargen gewährleistet werden, da der Schieberegler jedes Mal neu eingestellt werden muss, wobei die jeweilige Einstellung auch von dem aktuell zuständigen Bediener abhängt und demnach nicht reproduzierbar ist.

Der vorliegenden Erfindung liegt daher die Aufgabe zugrunde eine Vorrichtung und ein Verfahren bereitzustellen, welche/welches eine automatische Einstellung bzw. Regelung der Druckanstiegszeit ermöglicht. Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Die Erfindung ist daher auf eine Vorrichtung zum Umformen von Kunststoffvorformlingen zu Kunststoffbehältnissen gerichtet, mit einer Transporteinrichtung, welche die umzuformenden Kunststoffvorformlinge entlang eines vorgegebenen Transportpfads transportiert, wobei die Transporteinrichtung einen drehbaren Transportträger aufweist, an dem eine Vielzahl von Umformungsstationen angeordnet ist, welche jeweils eine Blasformeinrichtung aufweisen, innerhalb denen die Kunststoffvorformlinge zu den Kunststoffbehältnissen umformbar sind, wobei die Umformungsstationen jeweils eine Beaufschlagungseinrichtung aufweisen, welche die Kunststoffvorformlinge mit einem fließfähigen Medium und insbesondere Druckluft beaufschlagen, wobei die Beaufschlagungseinrichtung die Kunststoffvorformlinge mit einem Vorblasdruck, wenigstens einem und bevorzugt zwei Zwischenblasdrücken und einem Fertigblasdruck beaufschlagt. Weiterhin weist die Vorrichtung eine Regelungseinrichtung auf, welche dazu geeignet und bestimmt ist, eine zeitliche Dauer einer Druckanstiegszeit wenigstens eines Zwischenblasdrucks zu regeln. Bevorzugt ist es auch denkbar, dass die Kunststoffvorformlinge mit mehr als zwei Zwischenblasdrücken beaufschlagt werden und demnach bevorzugt mit n-Zwischenblasdrücken (Pi1, Pi2, Pi3, usw.).

Erfindungsgemäß weist die Vorrichtung eine Erfassungseinrichtung auf, welche dazu geeignet und bestimmt ist, wenigstens einen für das Kunststoffbehältnis charakteristischen Wert zu erfassen, wobei in Abhängigkeit dieses für das Kunststoffbehältnis charakteristischen Wertes, die zeitliche Dauer der Druckanstiegszeit wenigstens eines Zwischenblasdrucks regelbar ist. Bevorzugt wird dabei die Dauer der Druckanstiegszeit in Abhängigkeit des für das Kunststoffbehältnis charakteristischen Wertes automatisch geregelt. Bei der Druckanstiegszeit des Zwischenblasdrucks handelt es sich dabei um die Zeitspanne, während derer das Kunststoffbehältnis mit dem Zwischenblasdruck / den Zwischenblasdrücken beaufschlagt wird. Je kürzer diese ist, desto eher kann mit der Beaufschlagung des Fertigblasdrucks begonnen werden. Je höher diese ist, desto mehr Druckluft kann jedoch recycelt werden und für das nächste Umformungsverfahren genutzt werden.

Es wird demnach vorgeschlagen, dass mittels einer Erfassungseinrichtung, wie beispielsweise einer Bildaufnahmeeinrichtung, welche unter Umständen bereits an bestehenden Anlagen vorhanden ist, eine optimale Einstellung der Druckanstiegszeit des Zwischenblasdrucks ermittelt wird und die Regelungseinrichtung hierzu entsprechend (voll)automatisch anzusteuern. Eine optimale Einstellung ermöglicht dabei eine gute Qualität der Kunststoffbehältnisse bei möglichst geringem Druckluftverbrauch.

Grundsätzlich strebt die Anlage dabei diejenige Druckanstiegszeit an, bei der die sog. Effektivität (am Bedienerterminal (HMI) visualisierter Rechenwert, der die Effizienz der Luftrückgewinnung (Druckluftrecycling) beider Zwischenblasstufen rückmeldet) gerade 100% erreicht. Sobald die Behälterqualität ein kritisches Niveau unterschreitet, darf der Reglerwert jedoch nicht mehr zunehmen, d.h. die Druckanstiegszeit darf nicht weiter erhöht werden, auch wenn das optimale Recycling noch nicht erreicht wurde. Die Behälterqualität hat demnach Vorrang vor der Recyclingmenge.

Vorteilhaft soll demnach der Punkt bzw. die Einstellung zwischen guter Behälterqualität bei möglichst kurzer Druckanstiegszeit und minimalen Druckluftverbrauch bevorzugt automatisiert gefunden werden.

Hierzu wird, wie oben beschrieben, ein charakteristischer Wert des Kunststoffbehältnisses und bevorzugt eines mit der Vorrichtung umgeformten Kunststoffbehältnisses ermittelt.

Der charakteristische Wert wird anschließend an eine Auswertung (Auswerteeinrichtung) übermittelt, welche hieraus die Qualität des Kunststoffbehältnisses ermittelt. Ist die Behälterqualität gut wird die Regelungseinrichtung bevorzugt derart angesteuert bzw. verstellt, so dass diese die Druckanstiegszeit verringert. Ist die Behälterqualität schlecht wird die Regelungseinrichtung bevorzugt derart angesteuert bzw. verstellt, so dass diese die Druckanstiegszeit erhöht. Dieser Vorgang kann so lange wiederholt werden, bis eine ausreichende Behälterqualität, bei möglichst wenig Druckluftverbrauch erreicht ist. Vorteilhaft kann die Einstellung der Regelungseinrichtung mit den betreffenden Werten für Druckanstiegszeit und charakteristischen Werten für Behälterqualität in einer Speichereinrichtung gespeichert werden. Diese gespeicherten Werte können dann bei der nächsten Herstellung dieses Behältertyps ausgewählt werden.

Die Regelungseinrichtung regelt demnach bevorzugt die Dauer der Druckanstiegszeit, d.h. die zeitliche Dauer, mit der das Kunststoffbehältnis mit dem Zwischenblasdruck beaufschlagt wird.

Bei einer bevorzugten Ausführungsform weist die Vorrichtung daher eine Auswerteeinrichtung auf, welche dazu geeignet und bestimmt ist, den von der Erfassungseinrichtung wenigstens einen für das Kunststoffbehältnis erfassten charakteristischen Wert derart auszuwerten und/oder zu bewerten, so dass auf eine Qualität der Kunststoffbehältnisse geschlossen werden kann. Bevorzugt ist demnach ein Regelkreis denkbar, bei dem die Erfassungseinrichtung und/oder die Auswerteeinrichtung die Flaschenqualität bewertet, beispielsweise Eintrübung der Flaschenseitenwand oder Flaschenboden, jeweils bedingt durch Weißbruch.

Bei einer weiteren bevorzugten Ausführungsform ist die Auswerteeinrichtung dazu geeignet und bestimmt, den von der Erfassungseinrichtung erfassten wenigstens einen für das Kunststoffbehältnis charakteristischen Wert mit vorgegebenen und/oder gespeicherten Werten zu vergleichen. Bevorzugt wird dabei ein Istwert (erfasster charakteristischer Wert) mit einem Sollwert (gespeicherter Wert) verglichen. Der von der Erfassungseinrichtung erfasste wenigstens eine für das Kunststoffbehältnis charakteristische Wert bzw. der Istwert wird dabei bevorzugt mit einem vorgegebenen und/oder gespeicherten Bereich verglichen, insbesondere, ob der charakteristische Wert innerhalb eines vorgegebenen Bereichs liegt. Bei dem charakteristischen Wert kann es sich beispielsweise um eine Oberflächenbeschaffenheit (Farbe, Trübung, Rauheit) des Kunststoffbehältnisses, einen Durchmesser oder andere Abmessungen des Behältnisses, oder dergleichen handeln.

Die Vorrichtung weist daher bevorzugt eine Speichereinrichtung auf, in welcher eine Vielzahl von für das Kunststoffbehältnis charakteristische vorgegebene Werte und/oder Bereiche gespeichert sind. Bevorzugt kann es sich bei dem charakteristischen Wert auch um ein Bild bzw. ein für das Kunststoffbehältnis charakteristisches Bild handeln. In diesem Fall handelt es sich bei der Erfassungseinrichtung bevorzugt um eine Bildaufnahmeeinrichtung, wie eine Kamera, welche ein Bild des Kunststoffbehältnisses erfasst bzw. aufnimmt. Bei den vorgegebenen Werten und/oder Bereichen kann es sich bevorzugt um für das fertige Kunststoffbehältnis vorgegebene Parameter handeln, welche von dem Bediener an einem Bedienterminal ausgewählt oder eingegeben wurden. Dabei kann bevorzugt auch anhand dieser für das fertige Kunststoffbehältnis vorgegebenen Parameter die Druckanstiegszeit bestimmt werden.

Die Speichereinrichtung ist demnach bevorzugt auch dazu geeignet und bestimmt, Bilder zu speichern und die Auswerteeinrichtung dazu, dass von der Erfassungseinrichtung aufgenommene charakteristische Bild mit in der Speichereinrichtung gespeicherten Bildern zu vergleichen.

Bei einer bevorzugten Ausführungsform werden die erfassten Werte mit Sollwerten verglichen, welche bevorzugt in einer Cloud gespeichert sind (Big Data). Die Cloud kann dabei mit Werten von unterschiedlichen Maschinen unterschiedlicher Kunden gespeist werden.

Wie oben erwähnt, wird dann in Abhängigkeit dieses charakteristischen Wertes, welcher Aussagen über eine Qualität des Kunststoffbehältnisses gibt, die Regelungseinrichtung eingestellt, welche wiederum die Druckanstiegszeit regelt. Bei einer bevorzugten Ausführungsform ist die Regelungseinrichtung stufenlos zwischen einem Minimalwert und einem Maximalwert der Druckanstiegszeit verschiebbar. Der Minimalwert und der Maximalwert der Druckanstiegszeit sind dabei fest durch die Vorrichtung vorgegeben. Bevorzugt umfasst die Regelungseinrichtung dabei einen Schieberegler auf einer grafischen Benutzeroberfläche wie beispielsweise einem Bedienterminal der Vorrichtung. Bisher war es erforderlich, diesen bzw. dessen Position manuell einzustellen. Mit der Erfindung wird nun vorgeschlagen die Position des Schiebereglers automatisiert in Abhängigkeit einer Behälterqualität einzustellen bzw. zu regeln.

Bei der Auswerteeinrichtung kann es sich bevorzugt auch um eine KI (künstliche Intelligenz) oder eine Recheneinheit handelt, welche den charakteristischen Wert auswertet und bewertet und entsprechend die Regelungseinrichtung ansteuert bzw. einstellet. Die Kl oder Recheneinheit kann lokal mit der Vorrichtung verbunden sein. Bevorzugt ist die KI oder die Recheneinheit jedoch drahtlos mit der Vorrichtung verbunden. Besonders bevorzugt wird als KI ein Künstliches Neuronales Netz eingesetzt, das mittels überwachten Lernens trainiert wurde, um dem System die gewünschten Anpassungen bei Prozessschwankungen anzulernen. Hierbei wird ein konkretes Ergebnis für die unterschiedlichen Eingabemöglichkeiten vorgegeben. Anhand des ständigen Vergleichs zwischen Soll- und Ist-Ergebnis lernt das Netz die Neuronen passend zu verknüpfen. Es wäre jedoch auch möglich, das Künstliche Neuronale Netz mittels unbeaufsichtigten Lernens, bestärkendem Lernen oder stochastischem Lernen zu trainieren.

Die Beaufschlagung des Kunststoffbehältnisses erfolgt dabei in einer Vorblasphase und einer Ausformphase, wobei das Kunststoffbehältnis in der Vorblasphase mit dem Vorblasdruck beaufschlagt wird und in der Ausformphase mit dem wenigstens einem und bevorzugt zwei Zwischenblasdrücken und dem Fertigblasdruck.

Die Kunststoffbehältnisse werden dabei wenigstens 100 ms, bevorzugt wenigstens 110 ms und besonders bevorzugt wenigstens 115 ms mit dem Vorblasdruck beaufschlagt. Bevorzugt werden die Kunststoffbehältnisse wenigstens 250 ms, bevorzugt wenigstens 265 ms und besonders bevorzugt wenigstens 280 ms mit dem wenigstens einem Zwischenblasdruck und dem Fertigblasdruck beaufschlagt. Der Beginn der Beaufschlagung mit dem Fertigblasdruck hängt dabei bevorzugt von der Druckanstiegszeit der Zwischenblasdrücke ab.

Bei einer bevorzugten Ausführungsform weist die Vorrichtung eine Ventilanordnung auf, welche die Beaufschlagung der Kunststoffbehältnisse mit dem Vorblasdruck, dem wenigstens einem und bevorzugt zwei Zwischenblasdrücken und dem Fertigblasdruck steuert.

Bei der Vorrichtung zum Umformen von Kunststoffvorformlingen zu Kunststoffbehältnissen handelt es sich, wie oben erwähnt, bevorzugt um eine Blasformeinrichtung bzw. eine Umformungsstation. Die Blasformeinrichtungen sind dabei bevorzugt mehrteilig ausgebildet und weisen zwei Blasformhälften und eine Bodenform auf. Bevorzugt sind diese Blasformhälften lösbar an einer Formträgerschale oder an den Blasformträgern angeordnet. Die Blasformträger sind bezüglich einander schwenkbar, um die Blasformeinrichtungen zu öffnen und zu schließen. Zudem weist der Blasformträger Verriegelungsmechanismen auf, um die Formhälften während des Blasvorgangs gegeneinander zu verriegeln.

Die Kunststoffvorformlinge werden dabei bevorzugt durch Beaufschlagung mit Druckluft zu den Kunststoffbehältnissen expandiert werden. Dazu weist die Vorrichtung bevorzugt eine Beaufschlagungseinrichtung und eine Blasdüse auf, welche an eine Mündung der Kunststoffvorformlinge anlegbar ist, um die Kunststoffvorformlinge so mit Druckluft zu beaufschlagen bzw. mittels Druckluft zu expandieren.

Besonders bevorzugt ist die Beaufschlagungseinrichtung und insbesondere der Blaskolben und/oder die Blasdüse in einer Längsrichtung des Kunststoffbehältnisses bewegbar und/oder auf das Kunststoffbehältnis zu bewegbar.

Bei einer vorteilhaften Ausführungsform weisen die Blasformeinrichtungen bzw. die Umformungsstationen jeweils Reckstangen auf, welche die Kunststoffvorformlinge in ihrer Längsrichtung dehnen. Besonders bevorzugt ist die Blasmaschine bzw. sind der Träger und die Umformungsstationen innerhalb eines Reinraums angeordnet, welcher die Blasformmaschine gegenüber einer unsterilen Umgebung abgrenzt. Antriebseinrichtungen für die Verschließung, Verriegelung und/oder Öffnung der Blasformen befinden sich dabei bevorzugt außerhalb des Reinraums.

Die Blasformeinrichtungen werden dabei bevorzugt innerhalb des Reinraums transportiert, wobei der Reinraum bevorzugt von mehreren Wandungen begrenzt wird. Bevorzugt wird der Reinraum dabei von wenigstens einer stehenden Wandung und einer sich gegenüber dieser stehenden Wandung bewegenden Wandung begrenzt. Dabei kann beispielsweise der Transportträger, an dem die Blasformeinrichtungen angeordnet sind, bereits eine dieser Wandungen und insbesondere die sich bewegende Wandung aufweisen bzw. ausbilden. Der Reinraum grenzt die Blasformeinrichtungen dabei insbesondere von einer unsterilen Umgebung ab.

Die vorliegende Erfindung ist weiter auch auf ein Verfahren zum Umformen von Kunststoffvorformlingen zu Kunststoffbehältnissen gerichtet, wobei die umzuformenden Kunststoffvorformlinge entlang eines vorgegebenen Transportpfads transportiert werden, wobei eine Vielzahl von Umformungsstationen an einem drehbaren Transportträger angeordnet ist, wobei die Umformungsstationen jeweils eine Blasformeinrichtung aufweisen, innerhalb denen die Kunststoffvorformlinge zu den Kunststoffbehältnissen umgeformt werden, wobei die Umformungsstationen jeweils eine Beaufschlagungseinrichtung aufweisen, welche die Kunststoffvorformlinge mit einem fließfähigen Medium und insbesondere Druckluft beaufschlagen, wobei die Beaufschlagungseinrichtung die Kunststoffvorformlinge mit einem Vorblasdruck, wenigstens einem und bevorzugt zwei Zwischenblasdrücken und einem Fertigblasdruck beaufschlagt, und eine Regelungseinrichtung eine zeitliche Dauer einer Druckanstiegszeit wenigstens eines Zwischenblasdrucks regelt.

Erfindungsgemäß wird wenigstens ein für das Kunststoffbehältnis charakteristischer Wert erfasst, wobei in Abhängigkeit dieses für das Kunststoffbehältnis charakteristischen Wertes, die zeitliche Dauer der Druckanstiegszeit wenigstens eines Zwischenblasdrucks geregelt wird.

Es wird demnach auch verfahrensseitig vorgeschlagen eine optimale Einstellung der Druckanstiegszeit des Zwischenblasdrucks zu ermitteln und insbesondere die Regelungseinrichtung entsprechend (voll)automatisch in Abhängigkeit eines für das Kunststoffbehältnis charakteristischen Wertes anzusteuern.

Bei einem bevorzugten Verfahren wird der wenigstens eine für das Kunststoffbehältnis charakteristische Wert mit vorgegebenen und/oder gespeicherten Werten verglichen. Bei dem charakteristischen Wert kann es sich bevorzugt auch um ein für das Kunststoffbehältnis charakteristisches Bild bzw. ein Bild des Kunststoffbehältnisses handeln, wobei in diesem Fall das charakteristische Bild mit einem gespeicherten Bild verglichen wird. Der charakteristische Wert oder das charakteristische Bild ist dabei bevorzugt für eine Qualität des Kunststoffbehältnisses charakteristisch.

Die oben beschriebene Vorrichtung ist dabei insbesondere auch dazu eingerichtet und dafür vorgesehen, dieses beschriebene Verfahren durchzuführen, d. h., dass alle für die obig beschriebene Vorrichtung ausgeführten Merkmale ebenso für das hier beschriebene Verfahren offenbart sind und umgekehrt.

Weitere Vorteile und Ausführungsformen ergeben sich aus den beigefügten Zeichnungen. Darin zeigt:
- Fig. 1: eine schematische Darstellung einer Vorrichtung zum Umformen von Kunststoffvorformlingen zu Kunststoffbehältnissen;
- Fig. 2: ein Diagramm eines Blaskurvenverlaufs; und
- Fig. 3: ein Beispiel für eine Einstellung des Umformungsprozesses.

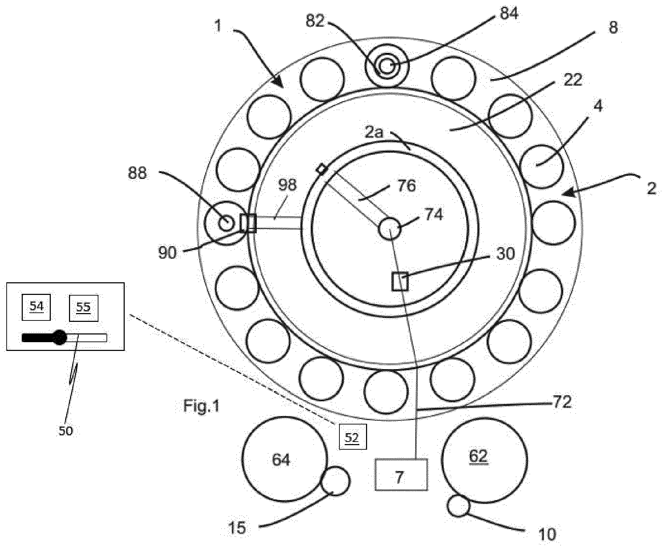

Figur 1 zeigt eine Vorrichtung 1 zum Umformen von Kunststoffvorformlingen 10 zu Kunststoffbehältnissen 15. Diese Vorrichtung 1 weist einen drehbaren Träger 22 auf, an dem eine Vielzahl von Umformungsstationen 4 angeordnet ist. Diese einzelnen Umformungsstationen 4 weisen jeweils Blasformeinrichtungen 82 auf, die in ihrem Inneren einen Hohlraum zum Expandieren der Kunststoffvorformlinge ausbilden.

Das Bezugszeichen 84 kennzeichnet eine Beaufschlagungseinrichtung, welche zum Expandieren der Kunststoffvorformlinge 10 dient, um diese so zu expandieren. Das Bezugszeichen 90 kennzeichnet eine Ventilanordnung wie einen Ventilblock, der bevorzugt eine Vielzahl von Ventilen aufweist, welche die Beaufschlagung der Kunststoffvorformlinge mit unterschiedlichen Druckniveaus steuern.

Bei einem bevorzugten Verfahren werden die Kunststoffvorformlinge zunächst mit einem Vorblasdruck P1 beaufschlagt, anschließend mit mindestens einem Zwischenblasdruck Pi, der höher ist als der Vorblasdruck und schließlich mit einem Fertigblasdruck P2, der höher ist als der Zwischenblasdruck Pi. Nach der Expansion der Kunststoffbehältnisse werden bevorzugt die Drücke bzw. die Druckluft wieder von dem Behältnis in die einzelnen Druckreservoirs zurückgeführt.

Das Bezugszeichen 88 kennzeichnet eine Reckstange, die dazu dient, die Kunststoffvorformlinge in ihrer Längsrichtung zu dehnen und das Bezugszeichen 30 eine Reckeinheit, welche die Bewegung der Reckstange steuert. Bevorzugt weisen sämtliche Umformungsstationen derartige Blasformen 82 sowie Reckstangen 88 auf. Bevorzugt liegt die Anzahl dieser Umformungsstationen zwischen 2 und 100, bevorzugt zwischen 4 und 60, bevorzugt zwischen 6 und 40.

Die Kunststoffvorformlinge 10 werden über eine Zuführeinrichtung 62 wie insbesondere aber nicht ausschließlich einen Transportstern der Vorrichtung zugeführt und über eine Abführeinrichtung 64 werden die umgeformten Kunststoffbehältnisse 15 abtransportiert.

Das Bezugszeichen 7 kennzeichnet eine Druckbereitstellungseinrichtung wie etwa einen Kompressor oder auch einen Druckluftanschluss. Die Druckluft wird dabei über eine erste Verbindungsleitung 72 zu einem Drehverteiler 74 gefördert und von diesem über eine zweite Verbindungsleitung 76 an den Ringkanal 2a abgegeben.

Neben diesem dargestellten Ringkanal 2a sind bevorzugt noch weitere Ringkanäle vorgesehen, die in der in Fig. 1 gezeigten Darstellung jedoch durch den Ringkanal 2a verdeckt sind, beispielsweise darunterliegend. Bevorzugt sind dabei mehrere Ringkanäle übereinander angeordnet. Das Bezugszeichen 98 kennzeichnet eine dritte Verbindungsleitung, welche die Druckluft an eine Umformungsstation 4 bzw. deren Ventilanordnung 90 abgibt. Bevorzugt ist jeder der Ringkanäle über entsprechende Verbindungsleitungen mit sämtlichen Umformungsstationen verbunden.

Das Bezugszeichen 8 kennzeichnet schematisch einen Reinraum, der hier bevorzugt ringförmig ausgebildet ist und den Transportpfad der Kunststoffvorformlinge 10 umgibt. Bevorzugt ist eine (geometrische) Drehachse bezüglich derer der Transportträger drehbar ist, außerhalb des Reinraums 8 angeordnet. Bevorzugt ist der Reinraum mit einer Dichtungseinrichtung, welche bevorzugt wenigstens zwei Wasserschlösser aufweist, gegenüber der unsterilen Umgebung abgedichtet.

Das Bezugszeichen 52 kennzeichnet eine Erfassungseinrichtung, zur Erfassung eines charakteristischen Wertes, wie beispielsweise eines Bildes des Kunststoffbehältnisses. Diese Erfassungseinrichtung kann dabei auch an einer Stelle der Vorrichtung 1 angeordnet sein. Der erfasste charakteristische Wert oder das erfasste charakteristische Bild werden, wie durch die gestrichelte Linie angedeutet, bevorzugt drahtlos an eine Auswerteeinrichtung 54 übermittelt, welche das Bild in der oben beschriebenen Weise auswertet bzw. mit in der Speichereinrichtung 55 gespeicherten Werten vergleicht. Das Bezugszeichen 50 kennzeichnet eine Regelungseinrichtung, wie hier ein Schieberegister, welches entsprechend des Ergebnisses der Auswertung eingestellt wird.

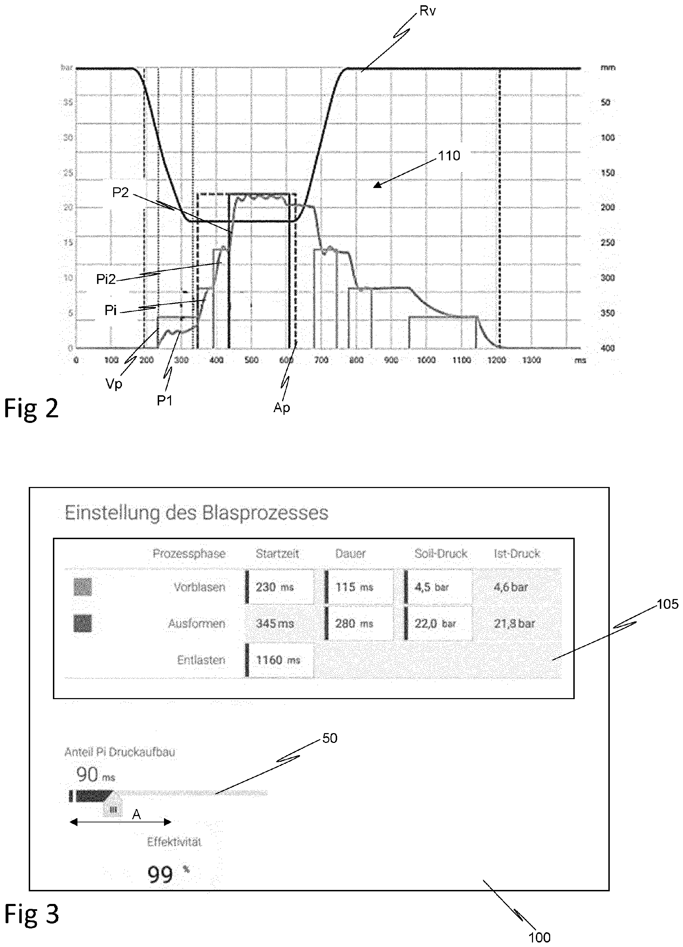

Die Figur 2 zeigt ein Diagramm eines Blaskurvenverlaufs 110. Das Bezugszeichen Vp kennzeichnet dabei die Vorblasphase, während der eine Beaufschlagung mit dem Vorblasdruck P1 erfolgt. Die Ausformungsphase Ap wird durch die gestrichelten Linien dargestellt, wobei der Bereich innerhalb der vollen Linie innerhalb der gestrichelten Linie die Beaufschlagung mit dem Fertigblasdruck P2 darstellt und der Bereich links der vollen Linie (zwischen voller und gestrichelter Linie) die Beaufschlagung mit den Zwischenblasdrücken Pi und Pi2. Nach der Beaufschlagung mit dem Fertigblasdruck P2 wird dieser eine gewisse Zeit gehalten. Anschließend wird die verwendete Druckluft recycelt und das Behältnis entlastet, was durch die abfallende Kurve dargestellt ist. Das Bezugszeichen Rv kennzeichnet den Verlauf der Reckstange.

Figur 3 zeigt ein Beispiel für eine Einstellung des Umformungsprozesses. Dabei handelt es sich hier insbesondere um eine beispielhafte Darstellung der einzelnen Werte auf einem Bedienterminal 100 der Vorrichtung. Insbesondere ist dabei hier der in Figur 2 gezeigte Verlauf dargestellt.

Wie aus der x-Achse der Figur 2 sowie der Anzeige 105 der Figur 3 erkennbar, startet die Vorblasphase Vp bei 230 ms und dauert 115 ms, so dass bei 345 ms die Ausformungsphase Ap startet, welche wiederum 280 ms dauert und somit bei 625 ms endet.

Das Bezugszeichen 50 kennzeichnet dabei die Regelungseinrichtung, wie hier einen Schieberegler, welcher, wie durch den Pfeil A verdeutlicht ist, verschiebbar ist. Dieser ist derart eingestellt, so dass die Beaufschlagung mit den Zwischenblasdrücken Pi, Pi2 für 90 ms erfolgt, was zu einer Effektivität des Prozesses von 99 % führt. Bevorzugt wird dabei durch das beschriebene Verfahren bzw. die beschriebene Vorrichtung die Position dieser Regelungseinrichtung automatisiert verstellt und angepasst, insbesondere in Abhängigkeit eines charakteristischen Wertes und/der der Qualität der Kunststoffbehältnisse.

### Bezugszeichenliste

- 1: Vorrichtung
- 2: Transporteinrichtung
- 2a: Ringkanal
- 4: Umformungsstationen
- 7: Druckbereitstellungseinrichtung
- 8: Reinraum
- 10: Kunststoffvorformling
- 15: Kunststoffbehältnis
- 22: Transportträger
- 30: Reckeinheit
- 50: Regelungseinrichtung
- 52: Erfassungseinrichtung
- 54: Auswerteeinrichtung
- 55: Speichereinrichtung
- 62: Zuführeinrichtung
- 64: Abführeinrichtung
- 72: erste Verbindungsleitung
- 74: Drehverteiler
- 76: zweite Verbindungsleitung
- 82: Blasformeinrichtung
- 84: Beaufschlagungseinrichtung
- 88: Reckstange
- 90: Ventilanordnung
- 98: dritte Verbindungsleitung
- 100: Bedienterminal
- 105: Anzeige
- 110: Blaskurvenverlauf

- A: Pfeil
- Ap: Ausformungsphase
- Vp: Vorblasphase
- P1: Druck P1, Vorblasdruck
- Pi: Druck Pi, Zwischenblasdruck
- Pi2: Druck Pi2, Zwischenblasdruck
- P2: Druck P2, Fertigblasdruck
- Rv: Verlauf der Reckstange

## Patentansprüche

1. Vorrichtung (1) zum Umformen von Kunststoffvorformlingen (10) zu Kunststoffbehältnissen (15) mit einer Transporteinrichtung (2), welche die umzuformenden Kunststoffvorformlinge (10) entlang eines vorgegebenen Transportpfads transportiert, wobei die Transporteinrichtung (2) einen drehbaren Transportträger (22) aufweist, an dem eine Vielzahl von Umformungsstationen (4) angeordnet ist, welche jeweils eine Blasformeinrichtung (82) aufweisen, innerhalb denen die Kunststoffvorformlinge (10) zu den Kunststoffbehältnissen (15) umformbar sind, wobei die Umformungsstationen (4) jeweils eine Beaufschlagungseinrichtung (84) aufweisen, welche die Kunststoffvorformlinge (10) mit einem fließfähigen Medium und insbesondere Druckluft beaufschlagen, wobei die Beaufschlagungseinrichtung die Kunststoffvorformlinge (10) mit einem Vorblasdruck (P1), wenigstens einem und bevorzugt zwei Zwischenblasdrücken (Pi, Pi2) und einem Fertigblasdruck (P2) beaufschlagt, und die Vorrichtung eine Regelungseinrichtung (50) aufweist, welche dazu geeignet und bestimmt ist, eine zeitliche Dauer einer Druckanstiegszeit wenigstens eines Zwischenblasdrucks (Pi, Pi2) zu regeln,
**dadurch gekennzeichnet, dass**
die Vorrichtung (1) eine Erfassungseinrichtung (52) aufweist, welche dazu geeignet und bestimmt ist, wenigstens einen für das Kunststoffbehältnis (15) charakteristischen Wert zu erfassen, wobei in Abhängigkeit dieses für das Kunststoffbehältnis (15) charakteristischen Wertes, die zeitliche Dauer der Druckanstiegszeit wenigstens eines Zwischenblasdrucks (Pi, Pi2) regelbar ist.

2. Vorrichtung (1) nach Anspruch 1,
**dadurch gekennzeichnet, dass**
die Vorrichtung (1) eine Auswerteeinrichtung (54) aufweist, welche dazu geeignet und bestimmt ist, den von der Erfassungseinrichtung (52) wenigstens einen für das Kunststoffbehältnis (15) erfassten charakteristischen Wert derart auszuwerten und/oder zu bewerten, so dass auf eine Qualität der Kunststoffbehältnisse (15) geschlossen werden kann.

3. Vorrichtung (1) nach Anspruch 2,
**dadurch gekennzeichnet, dass**
die Auswerteeinrichtung (54) dazu geeignet und bestimmt ist, den von der Erfassungseinrichtung (52) erfassten wenigstens einen für das Kunststoffbehältnis (15) charakteristischen Wert mit vorgegebenen und/oder gespeicherten Werten zu vergleichen.

4. Vorrichtung (1) nach Anspruch 3,
**dadurch gekennzeichnet, dass**
dass die erfassten Werte mit Sollwerten verglichen werden, welche bevorzugt in einer Cloud gespeichert sind.

5. Vorrichtung (1) nach Anspruch 1,
**dadurch gekennzeichnet, dass**
die Regelungseinrichtung (50) stufenlos zwischen einem Minimalwert und einem Maximalwert der Druckanstiegszeit verschiebbar ist.

6. Vorrichtung (1) nach Anspruch 1,
**dadurch gekennzeichnet, dass**
es sich bei der Erfassungseinrichtung (52) um eine Bildaufnahmeeinrichtung wie eine Kamera handelt.

7. Vorrichtung (1) nach Anspruch 1,
**dadurch gekennzeichnet, dass**
die Vorrichtung (1) eine Ventilanordnung (90) aufweist, welche die Beaufschlagung der Kunststoffbehältnisse (15) mit dem Vorblasdruck (P1), dem wenigstens einem und bevorzugt zwei Zwischenblasdrücken (Pi, Pi2) und dem Fertigblasdruck (P2) steuert.

8. Verfahren zum Umformen von Kunststoffvorformlingen (10) zu Kunststoffbehältnissen (15), wobei die umzuformenden Kunststoffvorformlinge (10) entlang eines vorgegebenen Transportpfads transportiert werden, wobei eine Vielzahl von Umformungsstationen (4) an einem drehbaren Transportträger (22) angeordnet ist, wobei die Umformungsstationen jeweils eine Blasformeinrichtung (82) aufweisen, innerhalb denen die Kunststoffvorformlinge (10) zu den Kunststoffbehältnissen (15) umgeformt werden, wobei die Umformungsstationen (4) jeweils eine Beaufschlagungseinrichtung (84) aufweisen, welche die Kunststoffvorformlinge (10) mit einem fließfähigen Medium und insbesondere Druckluft beaufschlagen, wobei die Beaufschlagungseinrichtung die Kunststoffvorformlinge (10) mit einem Vorblasdruck (P1), wenigstens einem und bevorzugt zwei Zwischenblasdrücken (Pi, Pi2) und einem Fertigblasdruck (P2) beaufschlagt, und eine Regelungseinrichtung eine zeitliche Dauer einer Druckanstiegszeit wenigstens eines Zwischenblasdrucks (Pi, Pi2) regelt,
**dadurch gekennzeichnet, dass**
wenigstens ein für das Kunststoffbehältnis (15) charakteristischer Wert erfasst wird, wobei in Abhängigkeit dieses für das Kunststoffbehältnis (15) charakteristischen Wertes, die zeitliche Dauer der Druckanstiegszeit wenigstens eines Zwischenblasdrucks (Pi, Pi2) geregelt wird.

9. Verfahren nach Anspruch 8,
**dadurch gekennzeichnet, dass**
der wenigstens eine für das Kunststoffbehältnis (15) charakteristische Wert mit vorgegebenen und/oder gespeicherten Werten verglichen wird.

## Claims

1. An apparatus (1) for forming plastic preforms (10) into plastic containers (15) with a transport device (2) which transports the plastic preforms (10) to be formed along a predetermined transport path, wherein the transport device (2) has a rotatable transport carrier (22) on which a plurality of forming stations (4) are arranged which each have a blow molding device (82) within which the plastic preforms (10) can be formed into the plastic containers (15), wherein the forming stations (4) each have an application device (84) which applies the plastic preforms (10) with a flowable medium and in particular compressed air, wherein the application device applies the plastic preforms (10) with a pre-blowing pressure (P1), at least one and preferably two intermediate blowing pressures (Pi, Pi2) and a final blowing pressure (P2), and the apparatus has a regulating device (50) which is suitable and intended for regulating a duration of a pressure rise time of at least one intermediate blowing pressure (Pi, Pi2),
**characterized in that**
the apparatus (1) has a detection device (52) which is suitable and intended for detecting at least one value characteristic of the plastic container (15), wherein depending on this value characteristic of the plastic container (15), the duration of the pressure rise time of at least one intermediate blowing pressure (Pi, Pi2) can be regulated.

2. The apparatus (1) according to claim 1,
**characterized in that**
the apparatus (1) has an evaluation device (54) which is suitable and intended for evaluating and/or assessing the at least one characteristic value detected by the detection device (52) for the plastic container (15) in such a way that a conclusion can be drawn about the quality of the plastic containers (15).

3. The apparatus (1) according to claim 2,
**characterized in that**
the evaluation device (54) is suitable and intended to compare the at least one value characteristic of the plastic container (15) detected by the detection device (52) with predetermined and/or saved values.

4. The apparatus (1) according to claim 3,
**characterized in that**
the detected values are compared with target values which are preferably saved in a cloud.

5. The apparatus (1) according to claim 1,
**characterized in that**
the regulating device (50) is smoothly displaceable between a minimum value and a maximum value of the pressure rise time.

6. The apparatus (1) according to claim 1,
**characterized in that**
the detection device (52) is an image recording device such as a camera.

7. The apparatus (1) according to claim 1,
**characterized in that**
the apparatus (1) has a valve arrangement (90) which controls the application of the pre-blowing pressure (P1), the at least one and preferably two intermediate blowing pressures (Pi, Pi2), and the final blowing pressure (P2) to the plastic containers (15).

8. A method for forming plastic preforms (10) into plastic containers (15), wherein the plastic preforms (10) to be formed are transported along a predetermined transport path, wherein a plurality of forming stations (4) are arranged on a rotatable transport carrier (22), wherein the forming stations each have a blow molding device (82) within which the plastic preforms (10) are formed into the plastic containers (15), wherein the forming stations (4) each have an application device (84) which apply the plastic preforms (10) with a flowable medium and in particular compressed air, wherein the application device applies the plastic preforms (10) with a pre-blowing pressure (P1), at least one and preferably two intermediate blowing pressures (Pi, Pi2) and a final blowing pressure (P2), and a regulating device regulates a duration of a pressure rise time of at least one intermediate blowing pressure (Pi, Pi2),
**characterized in that**
at least one value characteristic of the plastic container (15) is detected, wherein depending on this value characteristic of the plastic container (15), the duration of the pressure rise time of at least one intermediate blowing pressure (Pi, Pi2) is regulated.

9. The method according to claim 8,
**characterized in that**
the at least one value characteristic of the plastic container (15) is compared with predetermined and/or saved values.

## Revendications

1. Dispositif (1) de façonnage de préformes en matière plastique (10) en des récipients en matière plastique (15) avec un système de transport (2), qui transporte les préformes en matière plastique (10) à façonner le long d'un trajet de transport prédéfini, dans lequel le système de transport (2) présente un support de transport rotatif (22) sur lequel est disposée une pluralité de stations de façonnage (4), qui présentent chacune un système de moulage par soufflage (82), à l'intérieur duquel les préformes en matière plastique (10) peuvent être façonnées en les récipients en matière plastique (15), dans lequel les stations de façonnage (4) présentent chacune un système d'application (84) qui applique sur les préformes en matière plastique (10) un milieu fluide et en particulier de l'air comprimé, dans lequel le système d'application applique sur les préformes en matière plastique (10) une pression de pré-soufflage (P1), au moins une et de manière préférée deux pressions de soufflage intermédiaires (Pi, Pi2) et une pression de soufflage terminé (P2), et le dispositif présente un système de régulation (50) qui est adapté pour et se destine à réguler une durée temporelle d'un temps de montée en pression d'au moins une pression de soufflage intermédiaire (Pi, Pi2),
**caractérisé en ce que**
le dispositif (1) présente un système de détection (52) qui est adapté pour et se destine à détecter au moins une valeur caractéristique du récipient en matière plastique (15), dans lequel la durée temporelle du temps de montée en pression d'au moins une pression de soufflage intermédiaire (Pi, Pi2) peut être régulée en fonction de ladite valeur caractéristique du récipient en matière plastique (15).

2. Dispositif (1) selon la revendication 1,
**caractérisé en ce que**
le dispositif (1) présente un système d'analyse (54) qui est adapté pour et se destine à analyser et/ou à évaluer l'au moins une valeur caractéristique du récipient en matière plastique (15) détectée par le système de détection (52) de manière à pouvoir conclure à une qualité des récipients en matière plastique (15).

3. Dispositif (1) selon la revendication 2,
**caractérisé en ce que**
le système d'analyse (54) est adapté pour et se destine à comparer l'au moins une valeur caractéristique du récipient en matière plastique (15) détectée par le système de détection (52) à des valeurs prédéfinies et/ou enregistrées.

4. Dispositif (1) selon la revendication 3,
**caractérisé en ce que**
les valeurs détectées sont comparées à des valeurs de consigne, qui sont de préférence enregistrées dans un nuage.

5. Dispositif (1) selon la revendication 1,
**caractérisé en ce que**
le système de régulation (50) peut être déplacé en continu entre une valeur minimale et une valeur maximale du temps de montée en pression.

6. Dispositif (1) selon la revendication 1,
**caractérisé en ce que**
le système de détection (52) est un système d'acquisition d'images comme une caméra.

7. Dispositif (1) selon la revendication 1,
**caractérisé en ce que**
le dispositif (1) présente un ensemble de vannes (90) qui commande l'application sur les récipients en matière plastique (15) de la pression de pré-soufflage (P1), de l'au moins une et de préférence des deux pressions de soufflage intermédiaires (Pi, Pi2) et de la pression de soufflage terminé (P2).

8. Procédé de façonnage de préformes en matière plastique (10) en des récipients en matière plastique (15), dans lequel les préformes en matière plastique (10) à façonner sont transportées le long d'un trajet de transport prédéfini, dans lequel une pluralité de stations de façonnage (4) sont disposées sur un support de transport rotatif (22), dans lequel les stations de façonnage présentent chacune un système de moulage par soufflage (82) dans lequel les préformes en matière plastique (10) sont façonnées en les récipients en matière plastique (15), dans lequel les stations de façonnage (4) présentent chacune un système d'application (84) qui applique sur les préformes en matière plastique (10) un milieu fluide et en particulier de l'air comprimé, dans lequel le système d'application applique sur les préformes en matière plastique (10) une pression de pré-soufflage (P1), au moins une et de manière préférée deux pressions de soufflage intermédiaires (Pi, Pi2) et une pression de soufflage terminé (P2), et un système de régulation régule une durée temporelle d'un temps de montée en pression d'au moins une pression de soufflage intermédiaire (Pi, Pi2),
**caractérisé en ce que**
au moins une valeur caractéristique du récipient en matière plastique (15) est détectée, dans lequel la durée temporelle du temps de montée en pression d'au moins une pression de soufflage intermédiaire (Pi, Pi2) est régulée en fonction de ladite valeur caractéristique du récipient en matière plastique (15).

9. Procédé selon la revendication 8,
**caractérisé en ce que**
l'au moins une valeur caractéristique du récipient en matière plastique (15) est comparée à des valeurs prédéfinies et/ou enregistrées.
